# EUROPÄISCHE PATENTSCHRIFT

(11) **EP 2 228 117 B1**
(45) Veröffentlichungstag und Bekanntmachung des Hinweises auf die Patenterteilung: **15.04.2015**
(21) Anmeldenummer: 10153851.0
(22) Anmeldetag: 17.02.2010
(51) Int. Cl.: B01D 53/14, B01D 53/62, B01D 53/78, B01D 9/00, F23J 15/04

(54) **Absorberflüssigkeit, Verfahren zur Herstellung einer Absorberflüssigkeit sowie Verwendung einer Absorberflüssigkeit**
Absorber liquid, method for producing same and application of same
Liquide absorbeur, procédé de fabrication d'un liquide absorbeur, ainsi qu'utilisation d'un liquide absorbeur

(30) Priorität: 25.02.2009 DE 102009010536
(43) Veröffentlichungstag der Anmeldung: 15.09.2010
(73) Patentinhaber: Siemens Aktiengesellschaft, 80333 München (DE)
(72) Erfinder: Joh, Ralph, 63500, Seligenstadt (DE); Schneider, Rüdiger, 65817, Eppstein (DE)

(56) Entgegenhaltungen:
- WO-A1-03/095071
- WO-A2-2007/134994
- WO-A2-2008/155394
- FR-A1- 2 914 565
- US-A- 3 923 954
- US-A- 4 405 579
- KUMAR P.S. ET AL.: "Equilibrium Solubility of CO2 in Aqueous Potassium Taurate Solutions: Part 1. Crystallization in Carbon Dioxide Loaded Aqueous Salt Solutions of Amino Acids" INDUSTRIAL & ENGINEERING CHEMISTRY RESEARCH, Bd. 42, 17. Mai 2003 (2003-05-17), Seiten 2832-2840, XP002583870

## Beschreibung

Die Erfindung betrifft eine Absorberflüssigkeit, insbesondere für die selektive Absorption von Kohlendioxid aus dem Rauchgas einer Verbrennungsanlage. Die Erfindung betrifft weiterhin ein Verfahren zur Herstellung einer Absorberflüssigkeit sowie eine Verwendung.

Kohlendioxid fällt als klimawirksames Gas als Bestandteil des Rauchgases fossil befeuerter Kraftwerke zur Elektrizitätserzeugung an. Zur Vermeidung bzw. Verringerung entsprechender Emissionen besteht eine Anforderung dieses Kohlendioxid abzutrennen. Im großtechnischen Maßstab ist diese Abtrennung heute beispielsweise mit einem kombinierten Verfahren aus Absortpion und Desorption möglich. Hierbei muss ein geeignetes Absorptionsmittel, in der Regel eine wässrige Lösung von Komponenten, gefunden werden, was einerseits eine hohe Selektivität für die Absorption gegenüber Kohlendioxid hat und andererseits eine hohe Kapazität um hinreichend große Mengen von Kohlendioxid zu binden.

Bei fossil befeuerten Kraftwerksanlagen zur Erzeugung elektrischer Energie in großtechnischem Maßstab entsteht durch die Verbrennung eines fossilen Brennstoffs ein kohlendioxidhaltiges Abgas. Neben Kohlendioxid enthält das Abgas weitere Verbrennungsprodukte, wie z.B. die Gase Stickstoff, Schwefeldioxid, Stickstoffoxid und Wasserdampf sowie Festkörperpartikel, Stäube und Ruß. Das Abgas wird nach einer weitgehenden Abscheidung der Festkörperbestandteile in die Atmosphäre entlassen. Das sich in der Atmosphäre ansammelnde Kohlendioxid behindert die Wärmeabstrahlung unserer Erde und begünstigt durch den so genannten Treibhauseffekt eine Erhöhung der Erdoberflächentemperatur.

Um eine Reduzierung der Kohlendioxidemissionen bei fossil befeuerten Kraftwerksanlagen zu erreichen, kann Kohlendioxid aus dem Abgas abgetrennt werden.

Zur Abtrennung von Kohlendioxid aus einem Gasgemisch sind insbesondere aus der chemischen Industrie verschiedene Methoden bekannt. Insbesondere zum Abtrennen von Kohlendioxid aus einem Abgas nach einem Verbrennungsprozess (Post Combustion CO₂-Separation ist die Methode der bereits oben genannten "Absorption-Desorption" oder der Tieftemperaturabscheidung (Cryogenic) bekannt.

Im großtechnischen industriellen Maßstab wird das beschriebene Abtrennen von Kohlendioxid mit dem Absorptions-Desorptionsverfahren mit einem Waschmittel durchgeführt. Mit einem klassischen Absorptions-Desorptions-Prozess wird das Abgas in einer Absorptionskolonne mit einem selektiven Lösungsmittel als Waschmittel in Kontakt gebracht. Dabei erfolgt die Aufnahme von Kohlendioxid durch einen chemischen oder physikalischen Prozess.

Das mit Kohlendioxid beladene Lösungsmittel wird zur Abtrennung des Kohlendioxids und Regenerierung des Lösungsmittels in eine Desorptionskolonne geleitet. Die Abtrennung in der Desorptionskolonne kann thermisch erfolgen. Dabei wird aus dem beladenen Lösungsmittel ein Gas-Dampf-Gemisch aus gasförmigem Kohlendioxid und verdampftem Lösungsmittel oder Lösungsmittelbestandteilen ausgetrieben. Das verdampfte Lösungsmittel wird anschließend durch Kondensation von dem gasförmigen Kohlendioxid separiert. Das Kohlendioxid kann nun in mehreren Stufen verdichtet, gekühlt und anschließend verflüssigt werden. In flüssigem oder gefrorenem Zustand kann das Kohlendioxid dann einer Lagerung oder anderweitigen Verwertungen zugeführt werden. Das regenerierte Lösungsmittel wird zu der Absorberkolonne zurückgeleitet, wo es wieder Kohlendioxid aus dem kohlendioxidhaltigen Abgas aufnehmen kann.

Ein Problem bei den existierenden Verfahren zum Abtrennen von Kohlendioxid aus einem Gasgemisch ist insbesondere der sehr hohe Energieaufwand, der in Form von Heizenergie für die Desorption benötigt wird. Dies ist insbesondere problematisch bei der Integration einer Abscheideeinrichtung von Kohlendioxid in eine Kraftwerksanlage zur Energieerzeugung. Um diesem Problem entgegenzuwirken, sind aus dem Stand der Technik eine Reihe von Vorschlägen bekannt.

Gebräuchliche chemische Absorptionsmittel zeigen eine gute Selektivität und eine hohe Kapazität bezüglich des zu absorbierenden Gases, insbesondere des Kohlendioxids. Zur Regeneration des Solvenz ist jedoch sehr viel Energie erforderlich, was den Wirkungsgrad eines Kraftwerks mit nachgeschalteter CO₂-Entfernung empfindlich senkt. Aus der Sicht eines Anlagenbetreibers ist daher die Wirtschaftlichkeit einer CO₂-Abscheidung gegenwärtig nicht eindeutig nachgewiesen.

Eine entscheidende Komponente für das Erreichen eines wirtschaftlichen Betriebs einer Abscheidevorrichtung ist die Absorberflüssigkeit, die in der Absorptionskolonne bzw. in der Desorptionskolonne zum Einsatz kommt. Allerdings haben die verfügbaren Absorptionsmittel, die eine Eignung zur selektiven Absorption von Kohlendioxid aufweisen, aufgrund ihrer chemischen und physikalischen Eigenschaften Einsatzgrenzen, die einen wirtschaftlichen Betrieb der Anlage gefährden.

In der Publikation von KUMAR P.S. ET AL "Equilibrium Solubility of C02 in Aqueous Potassium Taurate Solutions: Part 1. Crystallization in Carbon Oioxide Loaded Aqueous Salt Solutions of Amino Acids" (INDUSTRIAL & ENGINEERING CHEMISTRY RESEARCH XP002583870) wird dazu bereits eine Absorptionsflüssigkeit mit dem Salz einer Aminosäure, insbesondere Kalium Taurin Säure vorgeschlagen, die mit einer Lauge oder einer Pufferlösung oder auch Ionen wie Carbamaten oder Bicabonaten versetzt ist.

Die Patentschrift US 4,405,579 A offenbart eine Absorberflüssigkeit aus Wasser und einer Mischung aus Aminosäuren und einem Sales eines Alkalimetalles oder Hydrodis als Zusatzstoff.

Aus der WO 2007/134994 A2 ist bereits eine auf Aminen und Aminocarbonsäuren basierende Absorptionsflüssigkeit bekannt, der als Zusatzstoff eine Lauge wie KOH oder auch anorganische Salze zugesetzt werden.

Die US 3,923,954 A schlägt vor, ein auf Aminosäuren basiertes Lösungsmittel Zink zuzusetzen.

Die WO 2008/155394 A2 offenbart eine wässrige Lösung eines Amins, einer Aminocarbonsäure und/oder Aminosulfonsäure, und einem Aktivator mit gesättigten Heterocyclen.

Auch aus der FR 2 914 565 A1 sind eine Absorptionsflüssigkeit und ein Zusatzstoff bekannt.

Eine Aufgabe der Erfindung ist es eine Absorberflüssigkeit anzugeben, die gegenüber den bisher bekannten Absorberflüssigkeiten eine deutlich verbesserte Einsatzmöglichkeit für eine CO₂-Abscheidung aufweisen. Eine weitere Aufgabe der Erfindung besteht in der Angabe eines Herstellverfahrens zur Herstellung der Absorberflüssigkeit. Eine weitere Aufgabe besteht in der Angabe einer Verwendung.

Die auf eine Absorberflüssigkeit gerichtete Aufgabe wird erfindungsgemäß gelöst durch eine Absorberflüssigkeit, insbesondere für die selektive Absorption von Kohlendioxid aus dem Rauchgas einer Verbrennungsanlage enthaltend ein kohlendioxidbindendes Absorptionsmittel und einem ionischen Zusatzstoff in einer Konzentration, die größer ist eine Minimumkonzentration, so dass das die Löslichkeit der bei Anbindung der von Kohlendioxid an das Absorptionsmittel gebildeten Produkte grösser wird.

Die Erfindung geht dabei bereits von der Erkenntnis aus, dass die gebräuchlichen chemischen Absorptionsmittel in der Regel aus wässrigen Lösungen von Komponenten (z.B. Kaliumcarbonat, Amine oder auch Aminosäuresalze) bestehen, die mit Kohlendioxid z.B. zu Carbamaten, Bicarbonaten oder Carbonaten reagieren. Die durch die Anbindung von Kohlendioxid an das Absorptionsmittel in wässriger Lösung gebildeten Produkte zeigen nur eine begrenzte Löslichkeit in Wasser. Daher können bei einer hohen Beladung der Absorberflüssigkeit mit Kohlendioxid Feststoffe ausfallen, die zu unerwünschten Belagsbildungen und Verstopfungen der Anlagenkomponente insbesondere in der Absorberkolonne führen können. Zusätzlich wird dadurch die Kapazität der angesetzten Absorberflüssigkeit für die Aufnahme von Kohlendioxid erheblich limitiert, was sich nachteilig auf den Energieverbrauch der CO₂-Abtrennung im Desorptionsbereich auswirkt. Um die Grenzen der Löslichkeit der durch die Absorption von Kohlendioxid gebildeten Produkte nicht zu überschreiten, werden die chemischen Waschprozesse entweder bei einer erhöhten Temperatur gefahren oder die Beladung wird durch die gewählte Umpumpmenge so gering gehalten, dass keine Kristallisation oder Ausfällungen auftreten können. Diese Ausweichtechnologie ist aber sehr nachteilig im Hinblick auf einen wirtschaftlichen Betrieb einer Abscheideeinrichtung.

Hier setzt die Erfindung mit der Angabe einer deutlich verbesserten Absorberflüssigkeit an. Will man eine Fällung der schwer löslichen Produkte verhindern, so muss dafür gesorgt werden, dass das chemische Potential bzw. die sogenannte "Aktivität" der gebildeten Substanzen so beeinflusst wird, dass die Komponenten in Lösung bleiben. Dies kann durch gezielten Zusatz eines ionischen Zusatzstoffes erreicht werden. Wird das Löslichkeitsgleichgewicht so in Richtung höherer Löslichkeiten verschoben, kommt es nicht zur Fällung. Damit wird eine Kristallisation verhindert sowie eine schädigende Ablagerung oder unerwünschte Beläge an den Komponenten der Anlage. Durch die Zugabe des ionischen Zusatzstoffes zur Absorberflüssigkeit kann die Kristallisation damit verhindert werden und der Absorptionsprozess sicherer und effizienter betrieben werden. Damit entfallen unökonomische Ausweichtechnologien, die bisher zum Einsatz kamen und wie oben genannt beispielsweise eine Fahrweise bei erhöhter Temperatur oder eine Einstellung einer geringen Beladung durch eine hohe Umpumpmenge der Absorberflüssigkeit erfolgt sind.

In einer besonders bevorzugten Ausgestaltung der Absorberflüssigkeit ist der kationische und anionische Teil des ionische Zusatzstoffes unterschiedlich zu den im Absorptionsprozess gebildeten Spezies welche in der Absorberflüssigkeit enthalten sind. Weiter bevorzugt ist das Salz inert und weist eine gute Löslichkeit in Wasser auf. Durch den Zusatz eines Salzes kann der Kristallisationspunkt einer Lösung zu höheren Konzentrationen verschoben werden.

Dabei ist es wichtig, dass in bevorzugter Ausgestaltung das Salz mit dem anionischen und kationischen Teil aus anderen An- bzw. Kationen besteht, als die durch die Anbindung von Kohlendioxid an das Absorptionsmittel gebildeten Produkte. Die zugesetzten Ionen bilden darüber hinaus vorzugsweise keine schwer in Wasser löslichen Produkte.

In einer weiter bevorzugten Ausgestaltung der Absorberflüssigkeit sind die bei Anbindung von Kohlendioxid an das Absorptionsmittel gebildeten Produkte Carbamat, Bicarbonate, Carbonate.

In einer besonders bevorzugten Ausgestaltung der Erfindung ist der ionische Zusatzstoff ein Anion, welches aus der Gruppe der Halogene, Sulfate, Phosphate oder Nitrate entnommen ist.

In weiter bevorzugter Ausgestaltung der Absorberflüssigkeit umfasst der ionische Zusatzstoff ein Kation aus der Gruppe von Ammonium, Kalzium, Magnesium, Zink oder Aluminium.

Weiter bevorzugt ist das kohlendioxidbindende Absorptionsmittel eine Mischung aus einem nebeneinander vorliegenden Aminosäuresalz und einer freien Aminosäure, wobei diese Mischung in wässriger Lösung in der Absorberflüssigkeit vorliegt.

Hierbei wird sich vorteilhafterweise die Erkenntnis zunutze gemacht, dass eine besonders Erfolg versprechende Klasse von Aminoverbindungen für die Absorption von Kohlendioxid solche Aminosäuren sind, die mit einer äquimolaren Menge an anorganischer Base (in der Regel Kaliumhydroxid, KOH) in das entsprechende Aminosäuresalz überführt werden. Aminosäuren, genauer gesagt Aminocarbonsäuren, sind eine Klasse von kleinen organischen Verbindungen mit mindestens einer Carboxylgruppe (COOH) und mindestens einer Aminogruppe (-NH₂). Als Aminogruppe wird in der organischen Chemie die funktionelle Gruppe (NH₂) der primären Amine und Aminosäuren verstanden. Die Aminogruppe ist eine basische funktionelle Gruppe, da das freie Elektronenpaar am Stickstoffatom - analog zu dem im Ammoniakmolekül ein Proton von einer Säure aufnehmen kann. In wässriger Lösung liegen Aminosäuren als so genannte Zwitterionen vor, d.h. die Aminogruppe ist protoniert und die Carboxylgruppe ist deprotoniert. Dabei wirkt die Aminogruppe als Base, da sie ein Proton aufnimmt (Protonenakzeptor) die Carboxylgruppe wirkt als Säure, da sie ein Proton abgibt (Protonendonator). Diese besondere Eigenschaft der Aminosäuren macht sich in bevorzugter Weise auch die vorliegende Erfindung zunutze. Hierdurch ergibt sich für die Absorberflüssigkeit eine weitere Verbesserung hinsichtlich des gelösten Absorptionsmittels, was in Kombination mit dem ionischen Zusatzstoff zur Verhinderung des Erreichens oder Überschreitens der Löslichkeitsgrenze der durch die Absorption gebildeten Produkte in wässriger Lösung, eine weitere Verbesserung darstellt. Bezogen auf das Absorptionsmittel in der Absorberflüssigkeit kann eine freie, d.h. nicht mit Kaliumhydroxid versetzte Aminosäure sowohl als Säure als auch als Base fungieren und ist im pkB-Wert variabel. In der bevorzugten Ausgestaltung der Absorberflüssigkeit macht sich die Erfindung zunutze, dass bei Aminosäuren der pkB-Wert temperaturabhängig ist. Liegt also neben dem bisher eingesetzten (reinen Aminosäuresalz) auch freie Aminosäure in dem Absorptionsmittel vor, so wird durch den Temperaturunterschied zwischen Absorber und Desorber bei einer Abscheideeinrichtung eine Variation des pkB-Werts des Absorptionsmittels erreicht, wobei im kalten Absorber ein hoher pkB-Wert erreicht wird, was die Absorption begünstigt und im heißen Desorber resultiert ein niedriger pkB-Wert, wodurch für die Desorption weniger Energie aufgebracht werden muss. Durch die koexistierende Mischung von Aminosäuresalz und einer freien Aminosäure ist dadurch eine Einstellbarkeit des pkB-Werts durch Temperaturvariation möglich, wobei der Effekt, dass bei exothermen Lösungsvorgängen die Löslichkeit mit steigender Temperatur abnimmt, gezielt genutzt wird. Der ionische Zusatzstoff, der bevorzugt eine anionische oder kationische Komponente der oben genannten Anionen bzw. Kationen ist, sorgt für einen größeren Betriebsbereich ohne, dass die Gefahr von Ausfällungen oder Kristallisationen der durch die Absorption von CO₂ gebildeten Produkte in der wässrigen Lösung besteht.

In einer weiter bevorzugten Ausgestaltung der Absorberflüssigkeit enthält das Absorptionsmittel eine nicht äquimolare Mischung des Aminosäuresalzes und der freien Aminosäure. Bevorzugt ist hierbei ein Überschuss an freier Aminosäure in der Mischung gegenüber der Konzentration des Aminosäuresalzes gegeben.

Vorzugsweise weist das Absorptionsmittel eine mit steigender Temperatur abnehmende Basenstärke (Basizität oder pkB-Wert) auf.

Bei einer besonders bevorzugten Ausgestaltung der Absorberflüssigkeit weist das Aminosäuresalz im Absorptionsmittel einen Substituenten auf, wobei der Substituent eine Verbindung aus der der Gruppe Wasserstoff, Alkyl, Hydroxyalkyl oder Aminoalkyl ist.

Vorzugsweise weist das Aminosäuresalz einen weiteren Substituenten auf, wobei der weitere Substituent aus der Gruppe von Wasserstoff, Alkyl, Hydroxyalkyl oder Halogenalkyl entnommen ist.

Das Absorptionsmittel in der Absorberflüssigkeit ist in einer weiter bevorzugten Ausgestaltung dadurch charakterisiert, dass das Aminosäuresalz ein Salz eines Metalls ist, insbesondere ein Salz eines Alkalimetalls mit einem Element aus der Gruppe Kalium oder Natrium, wobei in dem Aminosäuresalz in der Carboxylgruppe der Wasserstoff durch das Metall ersetzt ist.

Weiter bevorzugt weist die Aminosäure des Absorptionsmittels weitere Substituenten auf, wobei der weitere Substituent aus der Gruppe von Wasserstoff, Alkyl, Hydroxyalkyl oder Halogenalkyl entnommen ist.

Die für das Absorptionsmittel verwendbaren Aminosäuren können somit in einer allgemein gültigen Form beschrieben werden. Dabei sind die oben genannten Substituenten des Aminosäuresalzes und der Aminosäure bei Zugabe einer zusätzlichen Aminosäure beim Aminosäuresalz und der freien Aminosäure nicht unbedingt identisch, d.h., in einem spezifischen Absorptionsmittel kann das Aminosäuresalz und die Aminosäure im Überschuss mit jeweils unterschiedlichen Substituenten vorliegen. Durch die Ausgestaltung des Absorptionsmittels als Gemisch aus einem Aminosäuresalz und einer Aminosäure, die vorzugsweise in der Absorberflüssigkeit in wässriger Lösung koexistent vorliegen ist erstmals ein Absorptionsmittel gegeben, was in besonders vorteilhafter Weise im Zusammenspiel mit dem ionischen Zusatzstoff in einem Absorptions-Desorptions-Prozess für die Abscheidung von Kohlendioxid aus dem Rauchgas einer Verbrennungsanlage eingesetzt werden kann. Hierbei ist eine besonders günstige energetische Bilanz des Gesamtreinigungsprozesses im Absorptions- und im Desorptionsbereich gegeben. Insbesondere vorteilhaft wirkt sich aus, dass bei der so gewählten Absorberflüssigkeit mit einer Kombination aus einem effizienten Absorptionsmittel und einem die Ausfällung verhindernden Zusatzstoff die Nachteile bisheriger Absorberflüssigkeiten überwunden werden können.

Die auf ein Verfahren zur Herstellung einer Absorberflüssigkeit gerichtete Aufgabe wird erfindungsgemäß gelöst durch ein Verfahren zur Herstellung einer Absorberflüssigkeit, insbesondere einer Absorberflüssigkeit zur selektiven Absorption von Kohlendioxid aus einem Rauchgas einer Verbrennungsanlage, bei dem eine wässrige Lösung mit einem kohlendioxidbindenden Absorptionsmittel hergestellt wird, in der Absorptionsmittel gelöst ist, und bei dem ein ionischer Zusatzstoff in einer Konzentration, das chemische Potential bzw. die sogenannte Aktivität so beeinflusst, dass die bei der Reaktion von Kohlendioxid mit dem Absorptionsmittel gebildeten Produkte in Lösung bleiben.

Durch die Zugabe des ionischen Zusatzstoffes in einer Minimumkonzentration ist sichergestellt, dass die Löslichkeitsgrenze, die durch das Löslichkeitsgleichgewicht der gebildeten Produkte in der Lösung definiert ist, nicht erreicht wird.

In einer bevorzugten weiteren Ausgestaltung des Verfahrens wird das kohlendioxidbindende Absorptionsmittel in wässriger Lösung bereitgestellt, indem Aminosäure durch äquimolare Zugabe einer Lauge vollständig in ein Aminosäuresalz überführt wird, und durch weiterer Zugabe einer Aminosäure eine Mischung aus Aminosäuresalz und freier Aminosäure hergestellt wird, so dass Aminosäuresalz und freie Aminosäure koexistent vorliegen.

Statt die Aminosäure durch eine äquimolare Zugabe von Lauge vollständig in das Aminosäuresalz zu überführen, kann auch alternativ durch eine kleinere Zugabe an Lauge eine Mischung aus Aminosäuresalz und freier Aminosäure hergestellt werden. Eine weitere Möglichkeit ist die Zugabe einer zusätzlichen Aminosäure in eine bereits vorliegende äquimolare Mischung. Durch das nebeneinander Vorliegen von Aminosäuresalz und freier Aminosäure wird ein variabler pkB-Wert erzielt, der die Absorption von Kohlendioxid bei niedriger Temperatur begünstigt und die Desorption bei hoher Temperatur verbessert. Durch den Zusatzstoff in der Absorberflüssigkeit wird die Ausfällung oder Kristallisation der durch die Absorption von Kohlendioxid an das Absorptionsmittel entstehenden Produkte verhindert. Die auf eine Verwendung gerichtete Aufgabe der Erfindung wird gelöst durch eine Verwendung der Absorberflüssigkeit als Absorbens bei der Absorption von Kohlendioxid aus einem Rauchgas einer Verbrennungsanlage.

Bei der Verwendung wird zunächst die Absorberflüssigkeit vorzugsweise mit kohlendioxidhaltigem Abgas in Kontakt gebracht, so dass das Kohlendixoid in dem Absorptionsmittel der Absorberflüssigkeit gelöst bzw. von diesem aufgenommen wird, so dass ein beladenes Absorptionsmittel gebildet wird, und bei der anschließend Kohlendioxid aus beladenem Absorptionsmittel thermisch desorbiert wird.

In einer besonders bevorzugten Ausgestaltung der Verwendung wird diese bei der Absorption von Kohlendioxid aus dem Rauchgas mit dem Absorptionsmittel bei einer niedrigeren Temperatur als die Desorption durchgeführt. Durch diese besonders vorteilhafte Ausgestaltung der Verwendung ist erreicht, dass unter Ausnutzung des temperaturabhängigen pkB-Werts des Absorptionsmittels in dem Absorptions- bzw. Desorptionsprozess insgesamt eine besonders günstige Energiebilanz erreicht ist, so dass bei einer Integration einer Kohlendioxid-Abscheidevorrichtung in eine Kraftwerksanlage ein vergleichsweise hoher Wirkungsgrad durch die Verwendung der Absorberflüssigkeit erreicht ist.

In weiter bevorzugter Ausgestaltung der Verwendung wird diese bei der Absorption von Kohlendioxid aus dem Rauchgas einer fossil befeuerten Dampfkraftwerksanlage, aus dem Abgas einer Gasturbinenanlage oder aus dem Abgas einer kombinierten Gas- und Dampfturbinenanlage oder einer IGCC-Anlage angewendet.

Nachfolgend werden Ausführungsbeispiele der Erfindung anhand der beigefügten Zeichnung näher erläutert. Es zeigt:

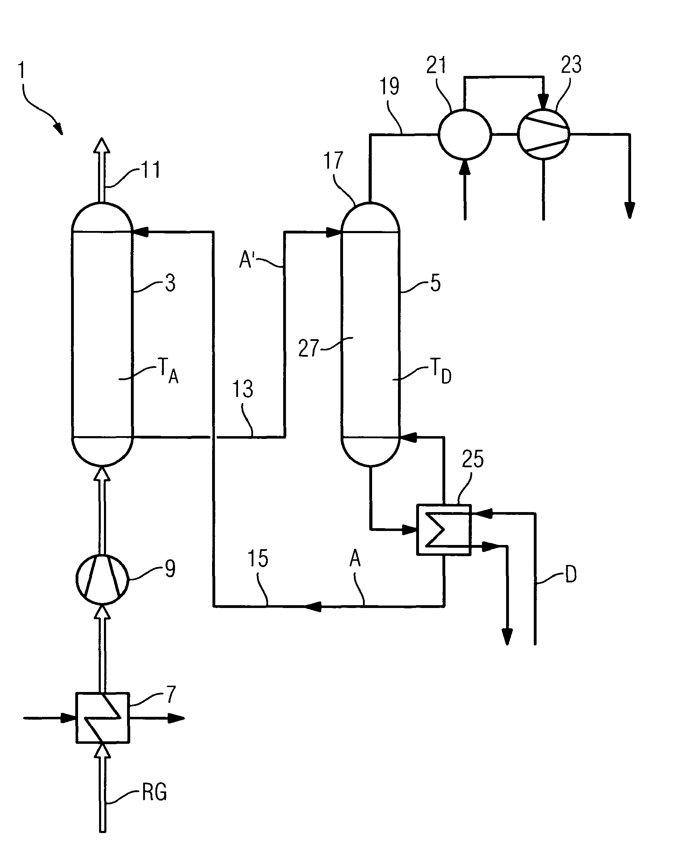

- FIG 1: eine schematische Darstellung einer Abscheidevorrichtung für Kohlendioxid aus dem Rauchgas einer Verbrennungsanlage.

In FIG 1 ist in schematischer Darstellung ein Anlagenschaltbild einer Abscheidevorrichtung 1 dargestellt, die Abscheidevorrichtung 1 weist eine Absorptionseinrichtung 3 und eine der Absorptionseinrichtung zugeordnete Desorptionseinrichtung 5 auf. Der Desorptionseinrichtung 5 ist ein Reboiler 25 zugeordnet, dem im Betriebsfall ein Prozessdampf D zur Bereitstellung von Wärme zustellbar ist. Die Desorptionseinrichtung 5 weist einen Kopfbereich 17 des Desorbers auf, an die eine Gasleitung 19 für CO₂-reiches Gas angeschlossen ist. In die Gasleitung 19 ist ein Kondensator 21 sowie eine dem Kondensator 21 nachgeschaltete Verdichtereinheit 23 zur Verdichtung des Kohlendioxids bzw. des kohlendioxidreichen Gases geschaltet. Die Absorptionseinrichtung 3 ist über eine Leitung 13 mit der Desorptionseinrichtung 5 verbunden. Die Desorptionsvorrichtung 5 ist über eine Leitung 15 über den Reboiler 25 mit der Absorptionseinrichtung 3 verbunden.

Im Betrieb der Abscheidevorrichtung 1 wird Rauchgas RG aus einer fossil befeuerten Verbrennungsanlage, die in FIG 1 nicht näher dargestellt ist, zunächst in einem Rauchgaskühler 7 abgekühlt und anschließend über die Fördereinrichtung 9 der Absorptionseinrichtung 3 zugestellt. Nach dem Gegenstromprinzip wird in entgegengesetzter Richtung zu dem Rauchgasstrom RG in der Absorptionseinrichtung 3 ein regeneriertes Absorptionsmittel A geführt. Das regenerierte Absorptionsmittel A liegt dabei in wässriger Lösung in einer Absorberflüssigkeit vor, die in besonderer Weise für die selektive Absorption von Kohlendioxid aus dem Rauchgas einer Verbrennungsanlage geeignet ist. Die Absorberflüssigkeit weist neben dem ein kohlendioxidbindenden Absorptionsmittel einen ionischen Zusatzstoff auf, der die Aktivität der bei der Reaktion von Kohlendioxid mit dem Absorptionsmittel A gebildeten Produkte so beeinflusst, dass diese in Lösung bleiben. Das regenerierte Absorptionsmittel A wird hierbei über die Leitung 15 geführt, die den Reboiler 25 mit der Absorptionseinrichtung 3 strömungstechnisch verbindet. Auf diese Weise kann in dem Reboiler 25 regeneriertes Absorptionsmittel A der Absorptionseinrichtung 3 zugeführt werden. Das Absorptionsmittel A umfasst in einer wässrigen Lösung ein Gemisch aus einem Aminosäuresalz und einer freien Aminosäure, so dass bei einer Absorptionstemperatur T_{A} in dem Absorptionsprozess eine Basizität pkB erreicht ist, so dass eine entsprechend hohe Löslichkeit des Kohlendioxids aus dem Rauchgas RG in dem Absorptionsmittel A erzielt ist. Durch das nebeneinander Vorliegen von Aminosäuresalz und freier Aminosäure wird ein variabler pkB-Wert erzielt, der die Absorption von Kohlendioxid bei niedriger Temperatur T_{A} in der Absorptionseinrichtung 3 begünstigt und die Desorption bei hoher Temperatur T_{D} in der Desorptionseinrichtung 5 verbessert. Hierbei wird sich der Effekt zunutze gemacht, dass bei exothermen Lösungsvorgängen die Löslichkeit mit steigender Temperatur abnimmt. Die gemäß der Erfindung hier zur Anwendung kommende Absorberflüssigkeit enthält ein Absorptionsmittel A aus einem Gemisch von Aminosäuresalz und freier Aminosäure und ist in besonderer Weise für diesen Absorptions-Desorptionsprozess konfektioniert und geeignet, so dass bei einer Integration der Abscheidevorrichtung 1 in eine Kraftwerksanlage ein besonders hoher Wirkungsgrad und ein erweiterter Betriebsbereich erreicht ist. Die Abscheideeffizienz ist deutlich gegenüber dem herkömmlichen Absorptionsmittel verbessert, in dem eine Ausfällung bzw. Kristallisation von durch die Anbindung von Kohlendioxid an das Absoptionsmittel A entstehenden Produkten in wässriger Lösung verhindert ist. Dies ist durch den Zusatzstoff in der Absorberflüssigkeit erreicht. Der Zusatzstoff ist ein ionischer Zusatzstoff, der Kationen, beispielsweise Amonium, Kalzium, Magnesium, Zink, Aluminium und Anionen beispielsweise Halogen, Sulfate, Phosphate und Nitrate enthält. Durch den ionischen Zusatzstoff in der Absorberflüssigkeit zusammen mit dem das kohlendioxidbindenden Absorptionsmittel wird eine Fällung verhindert, weil durch die Erfindung dafür gesorgt ist, dass das Löslichkeitsgleichgewicht verschoben wird. Die ionische Zugabe in dem Absorptionsmittel verschiebt den Kristallisationspunkt der Lösung zur höheren Konzentration. Das Salz besteht aus anderen An- bzw. Kationen als die mit Kohlendioxid gebildeten Produkte. Die zugesetzten Ionen dürfen darüber hinaus keine schwer löslichen Carbamate, Bicarbonate oder Carbonate bilden. Das auf diese Weise erzeugte nahezu kohlendioxidfreie Abgas 11 verlässt die Absorbereinrichtung 3 durch einen nicht näher dargestellten Kamin.

Durch den Absorptionsprozess mit der das Absorptionsmittel A enthaltenden Absorberflüssigkeit in der Absorptionseinrichtung 3 wird das Absorptionsmittel A mit Kohlendioxid CO₂ beladen, so dass ein beladenes Absorptionsmittel A' gebildet ist. Das beladene Absorptionsmittel A' wird über die Leitung 13 von der Absorptionseinrichtung 3 zu der Desorptionseinrichtung 5 geführt. In der Desorptionseinrichtung 5 wird das mit Kohlendioxid beladene Absorptionsmittel A' wieder von Kohlendioxid befreit. Diese Desorption wird üblicherweise durch thermisches Austreiben des Kohlendioxids aus dem Absorptionsmittel A' durchgeführt. Im Kopfbereich 17 der Desorptionseinrichtung 5 wird über die Gasleitung 19 kohlendioxidreiches Gas aus der Desorptionseinrichtung 5 über den Wärmetauscher 21 sowie ein sich an den Wärmetauscher 21 anschließenden Verdichter geführt. Das so abgeschiedene Kohlendioxid wird in dem Verdichter 23 verdichtet und für weitere Zwecke verwendet, z.B. die Injektion in eine Aquifere oder einen anderweitigen CO₂-Speicher.

Der Desorptionsprozess in der Desorptionseinrichtung 5 wird so gefahren, dass die Desorptionstemperatur T_{d} höher ist als die Absorptionstemperatur T_{A}. Mit der Absorberflüssigkeit gemäß der Erfindung die ein Absorptionsmittel A und einen ionischen Zusatzstoff enthält, ist insbesondere ein variabler pkB-Wert erzielt, der mit der Temperatur des Prozesses variiert, so dass der pkB-Wert im Bereich der Absorption höher ist als im Bereich der Desorption. Auf diese Weise wird die Absorption begünstigt und im heißeren Desorber resultiert ein niedrigerer pkB-Wert, wodurch für die Desorption ein geringerer Energieaufwand an Desorptionsenergie aufgebracht werden muss. Das thermische Austreiben des Kohlendioxid aus beladenem Absorptionsmittel A' kann daher unter deutlich geringerem Energieeinsatz erfolgen und durch den Einsatz der eine Kristallisation bzw. Ausfällung verhindernden Absorberflüssigkeit mit dem Zusatzstoff ist ein besonders sicherer Betrieb des Absorptionsprozesse und eine erhöhte Anlageneffizienz gegeben.

In besonderer Weise ist daher die gezeigte Abscheidevorrichtung 1 unter Verwendung der erfindungsgemäßen Absorberflüssigkeit geeignet in einer Kraftwerksanlage, z.B. einer Dampfkraftwerksanlage, einer Gasturbinenanlage, einer kombinierten Gas- und Dampfturbinenanlage, oder in einer Gas- und Dampfturbinenanlage mit integrierter Kohlevergasung eingesetzt zu werden. Darüber hinaus sind aber auch Anwendungen bei der Abscheidung von Kohlendioxid aus sonstigen Verbrennungsanlagen oder Verbrennungseinrichtungen denkbar. Auf dem Weg zur Entwicklung, insbesondere eines CO₂-freien Kraftwerks in der Zukunft, zeigt die Erfindung hier durch die Wahl und die Spezifikation der Absorberflüssigkeit einen vielversprechenden Weg auf, wie der Absorptions-Desorptionsprozess in effizienterer Weise als bisher in einen bestehenden Kraftwerksprozess integriert werden kann. Dies ist auch besonders vorteilhaft im Hinblick auf Kraftwerksmodernisierungen und Umrüstungen, bei denen eine konventionelle Kraftwerksanlage, die mit erheblichen CO₂-Emissionen behaftet ist, durch den zusätzlichen Einbau einer Abscheidevorrichtung für Kohlendioxid besonders klimafreundlich ausgerüstet bzw. umgerüstet werden kann. Die Verwendung der hier vorgeschlagenen Absorberflüssigkeit stellt hier einen wichtigen Baustein dar, um möglichen Problemen oder Schwierigkeiten bei der Integration einer Abscheidevorrichtung in einer Kraftwerksanlage im Hinblick auf Ausfällungen und Kristallisationen und damit unerwünschten Belegungen, Verunreinigungen und Verstopfungen der Kolonnenteile oder Leitungen wirkungsvoll zu begegnen.

## Patentansprüche

1. Absorberflüssigkeit, für die selektive Absorption von Kohlendioxid aus dem Rauchgas einer Verbrennungsanlage, enthaltend
- ein Absorptionsmittel (A), bestehend aus der Mischung aus einem nebeneinander vorliegenden Aminosäuresalz und einer freien Aminosäure, wobei das Aminosäuresalz einen Substituenten (R) und einen weitere Substituenten (R1) aufweist, wobei (R) aus den Gruppen Alkyl, Hydroxyalkyl, Wasserstoff oder Aminoalkyl und (R1) aus den Gruppen Alkyl, Hydroxyalkyl, Halogenalkyl oder Wasserstoff entnommen sind, und
- einen ionischen Zusatzstoff (X), der einen kationischen Teil, aus der Gruppe von Ammonium, Calcium, Magnesium, Zink oder Aluminium, oder anionischen Teil, aus der Gruppe der Halogene, Sulfate, Phosphate oder Nitrate, eines Salzes enthält, so dass die Aktivität der bei der Anbindung von Kohlendioxid an das Absorptionsmittel (A) gebildeten Produkte so beeinflusst wird, dass sich das Löslichkeitsgleichgewicht der gebildeten Produkte (P) bei einer höheren Löslichkeit einstellt.

2. Absorberflüssigkeit nach Anspruch 1,
**dadurch gekennzeichnet, dass** das Aminosäuresalz ein Salz eines Metalls (M) ist, insbesondere ein Salz eines Alkalimetalls mit einem Element aus der Gruppe Kalium oder Natrium, wobei in dem Aminosäuresalz in der Carboxylgruppe der Wasserstoff (H) durch das Metall (M) ersetzt ist.

3. Absorberflüssigkeit nach einem der Ansprüche 1 oder 2,
**dadurch gekennzeichnet, dass** die freie Aminosäure einen Substituenten (R) aufweist, wobei der Substituent (R) eine Verbindung aus der Gruppe der Alkyl, Hydroxyalkyl oder Aminoalkyl ist.

4. Absorberflüssigkeit nach einem der Ansprüche 1 bis 3,
**dadurch gekennzeichnet, dass** die freie Aminosäure weitere Substituenten (R1, R2) aufweist, wobei der weitere Substituent (R1, R2) aus der Gruppe von Alkyl, Hydroxyalkyl oder Halogenalkyl entnommen ist.

5. Verfahren zur Herstellung einer Absorberflüssigkeit, insbesondere einer Absorberflüssigkeit zur selektiven Absorption von Kohlendioxid aus einem Rauchgas einer Verbrennungsanlage, bei dem
(a) eine wässrige Lösung mit einem Kohlendioxid bindenden Absorptionsmittel (A) hergestellt wird, wobei das Absorptionsmittel (A) aus einer Mischung aus einem nebeneinander vorliegenden Aminosäuresalz und einer freien Aminosäure besteht, wobei das Aminosäuresalz einen Substituenten (R) und einen weitere Substituenten (R1) aufweist, wobei (R) aus den Gruppen Alkyl, Hydroxyalkyl, Wasserstoff oder Aminoalkyl und (R1) aus den Gruppen Alkyl, Hydroxyalkyl,Halogenalkyl oder Wasserstoff entnommen sind,
(b) und ein ionischen Zusatzstoff (X) der ein kationischer Teil , aus der Gruppe von Ammonium, Calcium, Magnesium, Zink oder Aluminium, oder anionischer Teil, aus der Gruppe der Halogene, Sulfate, Phosphate oder Nitrate, eines Salzes ist, in einer Konzentration (c) zugefügt wird, die so groß ist, das die Aktivität der die der bei Anbindung von Kohlendioxid an das Absorptionsmittel (A) gebildeten Produkte (P) in der Lösung so beeinflusst wird, dass sich das Löslichkeitsgleichgewicht der gebildeten Produkte (P) bei einer höheren Löslichkeit einstellt..

6. Verfahren nach Anspruch 5, bei dem das Kohlendioxid bindende Absorptionsmittel (A) in wässriger Lösung bereitgestellt wird indem
(a) Aminosäure durch äquimolare Zugabe einer Lauge vollständig in ein Aminosäuresalz überführt wird,
(b) durch weitere Zugabe einer Aminosäure eine Mischung aus Aminosäuresalz und freier Aminosäure hergestellt wird, so dass Aminosäuresalz und freie Aminosäure koexistent vorliegen.

7. Verwendung einer Absorberflüssigkeit nach einem der Ansprüche 1 bis 4, als Absorbens bei der Absorption von Kohlendioxid aus einem Rauchgas einer Verbrennungsanlage.

8. Verwendung nach Anspruch 7,
bei der das Absorberflüssigkeit zunächst mit kohlendioxidhaltigem Abgas in Kontakt gebracht wird, so dass Kohlendioxid in dem Absorberflüssigkeit gelöst wird, so dass beladenes Absorberflüssigkeit gebildet wird, und bei der anschließend Kohlendioxid aus beladenem Absorberflüssigkeit thermisch desorbiert wird.

9. Verwendung nach Anspruch 7 oder 8,
bei der die Absorption von Kohlendioxid aus dem Rauchgas mit der Absorberflüssigkeit bei einer niedrigeren Temperatur durchgeführt wird als die Desorption.

10. Verwendung nach einem der Ansprüche 7 bis 9,
**gekennzeichnet durch** eine Absorption von Kohlendioxid aus dem Rauchgas eines fossilbefeuerten Dampfkraftwerks, aus dem Abgas einer Gasturbinenanlage oder dem Abgas einer kombinierten Gas- und Dampfturbinenanlage oder einer IGCC-Anlage.

## Claims

1. Absorber liquid, for the selective absorption of carbon dioxide from the flue gas from a combustion plant, which contains
- an absorption medium (A) consisting of the mixture of an amino acid salt and a free amino acid present side by side, where the amino acid salt has a substituent (R) and a further substituent (R1), where (R) is selected from among the groups alkyl, hydroxyalkyl, hydrogen and aminoalkyl and (R1) is selected from among the groups alkyl, hydroxyalkyl, haloalkyl and hydrogen, and
- an ionic additive (X) which is a cationic part from the group consisting of ammonium, calcium, magnesium, zinc and aluminium or an anionic part from the group consisting of halogens, sulphates, phosphates and nitrates of a salt
so that the activity of the products formed in the binding of carbon dioxide onto the absorption medium (A) is influenced so that the solubility equilibrium of the products (P) formed is established at a relatively high solubility.

2. Absorber liquid according to Claim 1, **characterized in that** the amino acid salt is a salt of a metal (M), in particular a salt of an alkali metal with an element selected from the group consisting of potassium and sodium, where the hydrogen (H) in the carboxyl group is replaced by the metal (M) in the amino acid salt.

3. Absorber liquid according to either of Claims 1 and 2, **characterized in that** the free amino acid has a substituent (R) which is a compound from the group consisting of alkyl, hydroxyalkyl and aminoalkyl.

4. Absorber liquid according to any of Claims 1 to 3, **characterized in that** the free amino acid has further substituents (R1, R2) selected from the group consisting of alkyl, hydroxyalkyl and haloalkyl.

5. Process for producing an absorber liquid, in particular an absorber liquid for the selective absorption of carbon dioxide from a flue gas from a combustion plant, wherein
(a) an aqueous solution containing a carbon dioxide-binding absorption medium (A) is produced, where the absorption medium (A) consists of a mixture of an amino acid salt and a free amino acid present side by side, where the amino acid salt has a substituent (R) and a further substituent (R1), where (R) is selected from among the groups alkyl, hydroxyalkyl, hydrogen and aminoalkyl and (R1) is selected from among the groups alkyl, hydroxyalkyl, haloalkyl and hydrogen,
(b) and an ionic additive (X) which is a cationic part from the group consisting of ammonium, calcium, magnesium, zinc and aluminium or an anionic part from the group consisting of halogens, sulphates, phosphates and nitrates of a salt in a concentration (c) which is so great that the activity of the products (P) formed on binding of carbon dioxide to the absorption medium (A) in the solution is influenced so that the solubility equilibrium of the products (P) formed is established at a relatively high solubility.

6. Process according to Claim 5, in which the carbon dioxide-binding absorption medium (A) is provided in aqueous solution by
(a) converting amino acid completely into an amino acid salt by equimolar addition of an alkali,
(b) producing a mixture of amino acid salt and free amino acid by further addition of an amino acid so that amino acid salt and free amino acid coexist.

7. Use of an absorber liquid according to any of Claims 1 to 4 as absorbent in the absorption of carbon dioxide from a flue gas from a combustion plant.

8. Use according to Claim 7, wherein the absorber liquid is firstly brought into contact with carbon dioxide-containing offgas so that carbon dioxide is dissolved in the absorber liquid so that loaded absorber liquid is formed and carbon dioxide is subsequently thermally desorbed from the loaded absorber liquid.

9. Use according to Claim 7 or 8, wherein the absorption of carbon dioxide from the flue gas is carried out by means of the absorber liquid at a lower temperature than the desorption.

10. Use according to any of Claims 7 to 9, **characterized by** absorption of carbon dioxide from the flue gas from a fossil fuel-fired steam-power station, from the exhaust gas of a gas turbine plant or the exhaust gas of a combined gas and steam turbine plant or an IGCC plant.

## Revendications

1. Liquide d'absorbeur pour l'absorption sélective de dioxyde de carbone du gaz de fumée d'une installation de combustion, contenant
- un agent ( A ) d'absorption constitué du mélange d'un sel d'acide aminé et d'un acide aminé libre présents l'un à côté de l'autre, le sel d'acide aminé ayant un substituant ( R ) et un autre substituant ( R1 ), ( R ) étant pris dans les groupes alcoyle, hydroxyalcoyle, hydrogène et aminoalcoyle et ( R1 ) dans les groupes alcoyle, hyroxyalcoyle, haloalcoyle ou hydrogène, et
- un additif ( X ) ionique, qui contient une partie ( 4 ) ionique, choisie dans le groupe de l'ammonium, du calcium, du magnésium, du zinc ou de l'aluminium ou une partie anionique choisie dans le groupe des halogènes, des sulfates, des phosphates ou des nitrates, d'un sel de manière à influencer l'activité des produits formés par la fixation de dioxyde de carbone sur l'agent ( A ) d'absorption de façon à régler à une solubilité plus grande l'équilibre de solubilité des produits ( P ) formés.

2. Liquide d'absorbeur suivant la revendication 1, **caractérisé en ce que** le sel d'acide aminé est un sel d'un métal ( M ), notamment un sel d'un métal alcalin, ayant un élément choisi dans le groupe du potassium ou du sodium, l'hydrogène ( H ) dans le groupe carboxyle du sel d'acide aminé étant remplacé par le métal ( M ).

3. Liquide d'absorbeur suivant l'une des revendications 1 ou 2,
**caractérisé en ce que** l'acide aminé libre a un substituant ( R ), le substituant ( R ) étant un composé choisi dans le groupe des alcoyle, des hydroxyalcoyle ou des aminoalcoyle.

4. Liquide d'absorbeur suivant l'une des revendications 1 à 3,
**caractérisé en ce que** l'acide aminé libre a un autre substituant ( R1, R2 ), l'autre substituant ( R1, R2 ) étant pris dans le groupe des alcoyle, des hydroxyalcoyle ou des haloalcoyle.

5. Procédé de préparation d'un liquide d'absorbeur, notamment d'un liquide d'absorbeur pour l'absorption sélective du dioxyde de carbone d'un gaz de fumée d'une installation de combustion, dans lequel
( a ) on prépare une solution aqueuse ayant un agent ( A ) d'absorption fixant le dioxyde de carbone, l'agent ( A ) d'absorption étant constitué d'un mélange d'un sel d'acide aminé et d'un acide aminé libre présents l'un à côté de l'autre, le sel d'acide aminé ayant un substituant ( R ) et un autre substituant ( R1 ), ( R ) étant pris dans les groupes alcoyle, hydroxyalcoyle, hydrogène ou aminoalcoyle et ( R1 ) dans les groupes alcoyle, hydroxyalcoyle, haloalcoyle ou hydrogène,
( b ) et on ajoute un additif ( X ) ionique qui est une partie ( 4 ) ionique, choisie dans le groupe de l'ammonium, du calcium, du magnésium, du zinc ou du l'aluminium, ou une partie anionique, choisie dans le groupe des halogènes, des sulfates, des phosphates ou des nitrates, d'un sel en une concentration ( c ) qui est si grande que l'activité des produits ( P ) formés, lors de la fixation du dioxyde de carbone sur l'agent ( A ) d'absorption, soit influencée dans la solution de façon à régler à une solubilité plus grande l'équilibre de solubilité des produits ( P ) formés.

6. Procédé suivant la revendication 5, dans lequel on prépare en solution aqueuse l'agent ( A ) d'absorption fixant le dioxyde de carbone
( a ) en transformant un acide aminé par addition équimolaire d'une lessive entièrement en un sel d'acide aminé,
( b ) en préparant, par une addition supplémentaire d'un acide aminé, un mélange d'un sel d'acide aminé et d'acide libre de manière à ce qu'un sel d'acide aminé et un acide aminé libre soient présents en coexistence.

7. Utilisation d'un liquide d'absorbeur suivant l'une des revendications 1 à 4 comme absorbant dans l'absorption du dioxyde de carbone d'un gaz de fumée d'une installation de combustion.

8. Utilisation suivant la revendication 7,
dans lequel on met le liquide d'absorbeur d'abord en contact avec du gaz perdu contenant du dioxyde de carbone de manière à dissoudre le dioxyde de carbone dans le liquide d'absorbeur, de façon à former du liquide d'absorbeur chargé et dans lequel ensuite on désorbe thermiquement du dioxyde de carbone, du liquide d'absorbeur chargé.

9. Utilisation suivant la revendication 7 ou 8,
dans laquelle on effectue l'absorption du dioxyde de carbone du gaz de fumée par le liquide d'absorbeur à une température plus basse que celle de la désorption.

10. Utilisation suivant l'une des revendications 7 à 9,
**caractérisée par** une absorption de dioxyde de carbone du gaz de fumée d'une centrale électrique à combustible fossile, du gaz perdu d'une installation de turbine à gaz ou du gaz perdu d'une installation combinée de turbine à gaz et de turbine à vapeur ou d'une installation IGCC.
